# DEMANDE DE BREVET EUROPEEN

(11) **EP 3 091 334 A1**
(43) Date de publication de la demande: **09.11.2016**
(21) Numéro de dépôt: 16167867.7
(22) Date de dépôt: 02.05.2016
(51) Int. Cl.: G01C 7/06, F16L 55/48, G03B 37/00

(54) **DISPOSITIF ET PROCÉDÉ DE CARTOGRAPHIE EN TROIS DIMENSIONS D'UN CONDUIT SOUTERRAIN EN TRANCHÉE FERMÉE**

(30) Priorité: 04.05.2015 FR 1553987
(71) Demandeur: Cerene Services, 10600 La Chapelle Saint Luc (FR)
(72) Inventeur: ARREGUIT, Xavier, 1052 LE MONT SUR LAUSANNE (CH); ARREGUIT, Jonathan, 1052 LE MONT SUR LAUSANNE (CH); PASSONI, Gianfranco, 1473 CHATILLON (CH); AVICE, Emmanuel, 50300 SAINT SENIER SOUS AVRANCHES (FR)
(74) Mandataire: Cabinet Bleger-Rhein-Poupon

(57) **Abrégé**

L'invention concerne un dispositif de cartographie (1) en trois dimensions d'un conduit souterrain (C) en tranchée fermée, ce dispositif (1) comportant :
- une sonde (2), destinée à être introduite à l'intérieur du conduit souterrain (C), et comportant une centrale inertielle (30) comportant au moins un accéléromètre (300) et/ou au moins un gyroscope (301) ;
- un moyen de raccordement (6) pour raccorder la sonde (2) à un point fixe situé à l'extérieur du conduit (C), ce moyen de raccordement (6) étant de type semi-rigide, présentant une rigidité permettant, en agissant sur ce moyen de raccordement (6) à l'extérieur du conduit souterrain (C), de repousser la sonde (2) à l'intérieur de ce conduit souterrain (C) et s'étendant selon un axe et comportant des moyens pour accroître la rigidité de ce moyen de raccordement (6), ceci selon au moins une direction déterminée perpendiculaire à l'axe selon lequel s'étend ce moyen de raccordement (6);
- des deuxièmes moyens de détermination (7) pour déterminer la longueur et/ou la vitesse de déplacement et/ou l'accélération du moyen de raccordement (6);
- un moyen de calcul (12) pour calculer, dans un référentiel en trois dimensions, les coordonnées de la sonde (2), ceci au moins à partir des données fournies au moins par la centrale inertielle (30) et par les deuxièmes moyens de détermination (7);
- un moyen de cartographie (13) pour cartographier en trois dimensions le conduit souterrain (C), ceci à partir des coordonnées de la sonde (2) calculées par le moyen de calcul (12).

## Description

La présente invention a trait à un dispositif et à un procédé de cartographie en trois dimensions d'un conduit souterrain en tranchée fermée.

Cette invention concerne le domaine de la recherche et de la cartographie des réseaux de conduits souterrains.

En fait, le sous-sol, notamment urbain, contient un nombre croissant de réseaux et de conduits dont l'emplacement exact et/ou la sensibilité sont usuellement ignorés.

Aussi, lorsque des travaux sont entrepris, il est difficile de fournir aux entreprises réalisant ces travaux à proximité de ces réseaux, des informations pertinentes sur ces réseaux.

De tels travaux occasionnent, alors régulièrement, des dégradations à un tel réseau, plus particulièrement aux conduits d'un tel réseau et/ou à du matériel (fils, câbles, fibres...) que comporte intérieurement un tel conduit. De tels dégradations peuvent s'accompagner d'une interruption de service voire d'une atteinte à l'environnement. Plus grave encore, de telles dégradations peuvent occasionner des blessures graves aux travailleurs ou aux riverains.

Afin d'éviter ces inconvénients, il est possible de faire une cartographie de ces réseaux lors de l'ouverture de tranchées. Apparaît, alors, un autre inconvénient consistant en ce que l'entreprise spécialisée, qui réalise la cartographie, doit planifier et synchroniser les différentes interventions avec différentes autres parties prenantes (ouverture de la tranchée, pose de conduit, fermeture de la tranchée...) pour déterminer le moment propice pour procéder au relevé des données permettant de cartographier le réseau. Ce moment est généralement très court car la tranchée doit être refermée au plus vite. S'ajoute à cela la dispersion géographique des lieux à cartographier qui génère des difficultés d'organisation dans la société spécialisée (redondance des équipes et du matériel) nuisant à la productivité de cette entreprise.

Afin de remédier à ces inconvénients, il a été imaginé des solutions permettant de cartographier des réseaux sans ouvrir de tranchée, c'est-à-dire en tranchée fermée.

Un premier type de solutions concerne des méthodes de détection électromagnétique.

Parmi ces méthodes et dans le cas de conduits métalliques, il est connu de recourir à une détection électromagnétique, selon le cas, en mode passif ou en mode actif. On observera qu'une telle détection est, alors, limitée à des conduits métalliques.

Pour un conduit non métallique, il est connu de recourir à une détection de type électromagnétique en mode actif qui consiste, alors, à introduire une sonde dans le conduit et à envoyer un signal par le biais d'un émetteur qui lui est couplé. La fréquence émise par la sonde est reçue par un récepteur. Cette détection est utile pour détecter des réseaux non conducteurs mais requière un raccordement au réseau, une autorisation d'accès, une introduction de la sonde à l'intérieur du conduit sans nuire à son fonctionnement ce qui rend son applicabilité limitée.

La détection par géoradar repose sur le phénomène de propagation des ondes électromagnétiques. L'émission s'effectue par une antenne tandis qu'une autre antenne capte la réfraction ou la transmission dans le sous-sol. L'examen des ondes captées révèle l'identité de la structure souterraine et des éventuels réseaux. Cependant, cette méthode nécessite de faire le choix d'une fréquence. Ce choix conditionne la profondeur d'investigation et la résolution spatiale. Ainsi pour les fréquences les plus élevées (aux alentours de 1GHz)), cette méthode fournit de bonnes résolutions spatiales et des images radar précises, ceci pour de faibles profondeurs et inversement. De plus, la nature du sol conditionne la qualité de la détection et la profondeur atteinte. Finalement, cette méthode requière un grand savoir-faire.

Un autre type de solutions concerne des méthodes de détection par impulsion acoustique. Une telle méthode consiste à injecter des pulsations, soit sur la canalisation (méthode fréquemment utilisée pour les conduites d'eau et permettant avantageusement d'éviter une coupure du service) ou sur le fluide (plus difficile à mettre en oeuvre). Cette méthode présente l'inconvénient de ne pas être précise pour l'indication de la profondeur du conduit et n'est pas adaptée pour cartographier des réseaux enterrés.

La présente invention se veut de remédier aux inconvénients des dispositifs et méthodes de cartographie de l'état de la technique.

A cet effet, l'invention concerne un dispositif de cartographie en trois dimensions d'un conduit souterrain en tranchée fermée, ce dispositif comportant :
- une sonde, destinée à être introduite à l'intérieur du conduit souterrain, et comportant une centrale inertielle comportant au moins un accéléromètre et/ou au moins un gyroscope;
- un moyen de raccordement pour raccorder la sonde à un point fixe situé à l'extérieur du conduit, ce moyen de raccordement, d'une part, étant de type semi-rigide et présentant une rigidité permettant, en agissant sur ce moyen de raccordement à l'extérieur du conduit souterrain, de repousser la sonde à l'intérieur de ce conduit souterrain, ceci pour assurer le déplacement de cette sonde à l'intérieur de ce conduit souterrain, d'autre part, s'étendant selon un axe et comportant des moyens pour accroître la rigidité de ce moyen de raccordement, ceci selon au moins une direction déterminée perpendiculaire à l'axe selon lequel s'étend ce moyen de raccordement et par rapport à au moins une autre direction perpendiculaire à cet axe ;
- des deuxièmes moyens de détermination pour déterminer la longueur et/ou la vitesse de déplacement et/ou l'accélération du moyen de raccordement ;
- un moyen de calcul pour calculer, dans un référentiel en trois dimensions, les coordonnées de la sonde, ceci au moins à partir des données fournies par la centrale inertielle et par les deuxièmes moyens de détermination ;
- un moyen de cartographie pour cartographier en trois dimensions le conduit souterrain, ceci à partir des coordonnées de la sonde calculées par le moyen de calcul.

Une autre caractéristique consiste en ce que le moyen de raccordement présente, perpendiculairement à l'axe selon lequel s'étend ce moyen de raccordement, une section non circulaire, de préférence parallélépipédique, qui constitue les moyens pour accroître la rigidité.

Plus précisément, le moyen de raccordement est constitué par un ruban présentant, perpendiculairement à l'axe selon lequel s'étend ce moyen de raccordement, une section non circulaire, de préférence rectangulaire, qui constitue les moyens pour accroître la rigidité.

Une caractéristique additionnelle consiste en ce que la sonde comporte une mémoire pour enregistrer les données fournies au moins par la centrale inertielle tandis que le dispositif comporte, d'une part, un moyen de traitement pour le traitement des données fournies au moins par la centrale inertielle et par les deuxièmes moyens de détermination et, d'autre part, au moins un moyen de transmission pour transmettre, audit moyen de traitement, au moins les données fournies par les deuxièmes moyens de détermination ainsi que les données fournies par la centrale inertielle et enregistrées dans la mémoire de la sonde.

Selon une autre caractéristique, le moyen de calcul comporte un algorithme de fusion des données fournies au moins par les premiers moyens de détermination et par les deuxièmes moyens de détermination, voire encore par le ou les moyens de détection.

Une caractéristique additionnelle consiste en ce que le dispositif comporte une mémoire dans laquelle on enregistre les données fournies au moins par la centrale inertielle et par les deuxièmes moyens de détermination, et que le moyen de calcul est conçu pour calculer les coordonnées de la sonde, ceci à partir de ces données enregistrées dans la mémoire et de manière différée dans le temps.

Finalement, le dispositif comporte au moins un moyen de guidage pour guider cette sonde à l'intérieur du conduit souterrain.

Cette invention concerne, également, un procédé de cartographie en trois dimensions d'un conduit souterrain en tranchée fermée, ce procédé consiste en ce que :
- on positionne, dans une position initiale et en dehors du conduit, une sonde raccordée à un point fixe situé à l'extérieur du conduit, ceci par l'intermédiaire d'un moyen de raccordement, d'une part, de type semi-rigide et présentant une rigidité permettant, en agissant sur ce moyen de raccordement à l'extérieur du conduit souterrain, de repousser la sonde à l'intérieur de ce conduit souterrain, d'autre part, s'étendant selon un axe et comportant des moyens pour accroître la rigidité de ce moyen de raccordement, ceci selon au moins une direction déterminée perpendiculaire à l'axe selon lequel s'étend ce moyen de raccordement et par rapport à au moins une autre direction perpendiculaire à cet axe ;
- on introduit la sonde à l'intérieur du conduit et on assure le déplacement de cette sonde à l'intérieur de ce conduit, ceci en repoussant cette sonde à l'intérieur de ce conduit souterrain en agissant sur le moyen de raccordement à l'extérieur du conduit souterrain;
- au cours du déplacement de la sonde à l'intérieur du conduit, on collecte des données fournies au moins, d'une part, par une centrale inertielle que comporte la sonde, et, d'autre part, par des deuxièmes moyens de détermination pour déterminer la longueur et/ou la vitesse de déplacement et/ou l'accélération du moyen de raccordement ;
- par rapport à la position initiale et à partir des données collectées, on calcule les coordonnées des positions adoptées par la sonde, ceci dans un référentiel à trois dimensions ;
- à partir des coordonnées calculées, on cartographie en trois dimensions le conduit souterrain.

Une autre caractéristique de ce procédé consiste en ce que :
- au cours du déplacement de la sonde à l'intérieur du conduit souterrain, d'une part, on collecte des données brutes fournies au moins par le ou les accéléromètres et/ou par le ou les gyroscopes que comporte la centrale inertielle et, d'autre part, on assure au moins un arrêt de la sonde au cours duquel ou desquels on procède à un calibrage de cette sonde ;
- au moins en fonction des données brutes fournies au moins par le ou les accéléromètres et/ou par le ou les gyroscopes ainsi qu'à partir des résultats du calibrage, on calcule les coordonnées des positions adoptées par la sonde, ceci dans un référentiel à trois dimensions ;
- à partir des coordonnées calculées, on cartographie en trois dimensions le conduit souterrain.

Ce procédé consiste encore en ce qu'on transmet les données collectées à un moyen de traitement et on enregistre ces données collectées dans une mémoire que comporte un tel moyen de traitement, ceci avant de calculer de manière différée dans le temps les coordonnées des positions de la sonde à partir de ces données collectées et enregistrées dans la mémoire, notamment après synchronisation de ces coordonnées dans le temps.

Finalement et lorsqu'on calcule les coordonnées des postions de la sonde, on met en oeuvre un algorithme de fusion des données collectées, notamment un algorithme basé sur un filtre de Kalman et/ou un algorithme d'optimisation non linéaire, et/ou une technique connue sous la dénomination « zéro velocity updates » ZUPT, plus particulièrement sous la dénomination « periodic zéro velocity updates ».

Ainsi, l'invention consiste à utiliser des données fournies par plusieurs capteurs constitués par au moins un accéléromètre et/ou au moins un gyroscope ainsi que par des deuxièmes moyens de détermination (de la longueur et/ou de la vitesse et/ou de l'accélération du moyen de raccordement). Cette invention utilise, alors, des données redondantes issues de plusieurs capteurs ce qui permet, avantageusement, de compenser les erreurs de dérive de ces capteurs et d'améliorer la précision du calcul des coordonnées de la position de la sonde et, donc, du conduit.

L'invention consiste, également, en ce que le dispositif de cartographie comporte un moyen de raccordement comportant des moyens pour accroître sa rigidité ceci selon au moins une direction déterminée perpendiculaire à l'axe selon lequel il s'étend. Cette caractéristique permet, avantageusement, au moyen de raccordement de présenter un tangage et un roulis limités (plus particulièrement entre deux points de déplacement proches) et, donc, de réduire les degrés de liberté de la sonde. Ceci permet, de manière avantageuse, d'inférer avec une certaine probabilité le point d'arrivée de la sonde ainsi que son orientation dans l'espace, ceci après un incrément de déroulement/enroulement du moyen de raccordement.

Une autre caractéristique consiste en ce que la sonde comporte une mémoire pour enregistrer les données fournies au moins par la centrale inertielle tandis que le dispositif comporte, d'une part, un moyen de traitement des données fournies au moins par la centrale inertielle et par les deuxièmes moyens de détermination et, d'autre part, au moins un moyen de transmission, audit moyen de traitement, des données fournies au moins par les deuxièmes moyens de détermination ainsi que par la centrale inertielle et enregistrées dans la mémoire de la sonde. Cette caractéristique permet, avantageusement, d'enregistrer les données fournies au moins par la centrale inertielle, ceci durant toute la durée du parcours de la sonde à l'intérieur du conduit souterrain et évite ainsi d'avoir recours à un moyen de raccordement (connu de l'état de la technique), qui comporte des moyens de transmission de ces données et qui, de ce fait, présente une structure et une conception complexes ainsi qu'un coût élevé. Ceci permet, alors, d'avoir recours à un moyen de raccordement de conception simplifiée, de coût réduit, et qui, en plus, peut présenter les caractéristiques mentionnées ci-dessus et procurer les avantages mentionnés ci-dessus.

De plus, cette invention consiste en ce qu'on enregistre au moins une partie des données collectées dans une mémoire, on synchronise dans le temps ces données enregistrées, et on calcule les coordonnées des positions de la sonde, ceci de manière différée dans le temps. Ceci permet, avantageusement (et, notamment, en tenant compte d'informations extraites d'images enregistrées et fournies par une caméra), d'éviter et de corriger des erreurs, notamment celles résultant du fait que la sonde n'est plus au centre du conduit (par exemple en raison de la présence de câbles dans le conduit).

De manière additionnelle, le procédé de cartographie consiste en ce qu'au cours du déplacement de la sonde à l'intérieur du conduit souterrain, d'une part, on collecte des données brutes fournies au moins par le ou les accéléromètres et/ou par le ou les gyroscopes et, d'autre part, on assure au moins un arrêt de la sonde au cours duquel ou desquels on procède à un calibrage de cette sonde. Au moins en fonction des données brutes fournies au moins par le ou les accéléromètres et/ou par le ou les gyroscopes ainsi qu'à partir des résultats du calibrage, on calcule les coordonnées des positions adoptées par la sonde (ceci dans un référentiel à trois dimensions) à partir desquelles on cartographie en trois dimensions le conduit souterrain.

A ce propos, on observera que, lorsque la sonde est à l'arrêt, cette sonde est uniquement soumise à la gravité, c'est à dire uniquement soumise à l'accélération de la pesanteur. Ceci permet, alors avantageusement, d'une part, de calibrer cette sonde par rapport à cette seule accélération de la pesanteur et, d'autre part, d'inférer l'orientation dans l'espace de la sonde à l'arrêt. De plus,

Cette invention permet, alors et avantageusement, d'atteindre, pour la position de la sonde, une précision de +/-1% depuis un point de référence connu, c'est-à-dire une précision +/-20cm sur 20 mètres de conduit.

En outre et de manière avantageuse, le dispositif, respectivement le procédé, selon l'invention sont susceptibles d'être utilisés, respectivement mis en oeuvre, pour la cartographie de tous les types de conduits aussi bien les conduits en matériau métallique qu'en matériau plastique mais également quel que soit le contenu d'un tel conduit (eau, gaz, câbles électriques, fibres...) . Finalement, une telle utilisation et/ou une telle mise en oeuvre ne nécessite pas l'interruption du service.

D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant aux dessins joints en annexe et dans lesquels :
- la figure 1 est une vue schématisée du dispositif de cartographie conforme à l'invention ;
- la figure 2 est une vue schématisée d'un premier mode de réalisation de la sonde que comporte le dispositif selon l'invention ;
- la figure 3 est une vue schématisée d'un deuxième mode de réalisation de la sonde que comporte le dispositif selon l'invention.

Cette invention concerne le domaine de la recherche et de la cartographie des réseaux de conduits souterrains.

En particulier, cette invention concerne un dispositif 1 de cartographie en trois dimensions d'un conduit souterrain C en tranchée fermée. A ce propos, on observera qu'un tel conduit souterrain C peut être constitué, soit par un conduit souterrain technique recevant intérieurement du matériel (fils, câbles, fibres...) ou véhiculant un fluide (eau, gaz...) , soit par un fourreau de visite juxtaposé à un tel conduit souterrain technique.

Ce dispositif 1 comporte une sonde 2 destinée à être introduite à l'intérieur du conduit souterrain C.

Cette sonde 2 comporte une centrale inertielle 30 qui comporte au moins un accéléromètre 300 et/ou au moins un gyroscope 301.

Le dispositif 1 peut, alors, également comporter des premiers moyens de détermination 3 pour déterminer la position et/ou l'orientation de cette sonde 2.

De tels premiers moyens de détermination 3 peuvent, alors, comporter, au moins ladite centrale inertielle 30, que comporte la sonde 2, et qui comporte ledit au moins accéléromètre 300 et/ou ledit au moins un gyroscope 301.

En fait, cette centrale inertielle 30 comporte, de préférence, une pluralité d'accéléromètres 300 (notamment trois d'accéléromètres) et/ou une pluralité de gyroscopes 301 (notamment trois gyroscopes).

Un tel accéléromètre 300 et/ou un tel gyroscope 301 sont, de préférence, de type à trois axes.

A ce propos, on observera que les données fournies par le ou les accéléromètres 300 permettent de déterminer la position de la sonde 2 tandis que les données fournies par le ou les gyroscopes 301 permettent de déterminer l'orientation de cette sonde 2.

De manière alternative ou (et de préférence additionnelle), les données fournies par le ou les accéléromètres 300 (plus particulièrement lorsque celui-ci ou ceux-ci sont à l'arrêt), voire encore par le ou les gyroscopes 301, permettent de déterminer l'attitude de la sonde 2.

De manière alternative ou (et de préférence) additionnelle, les premiers moyens de détermination 3 peuvent, encore, comporter au moins une caméra 31 que comporte, alors, la sonde 2.

Une telle caméra 31 équipe, de préférence, une extrémité de la sonde 2, plus particulièrement l'extrémité orientée dans la direction de déplacement de cette sonde 2 à l'intérieur du conduit C. En fait, une telle caméra 31 est, plus particulièrement, conçue pour détecter la position de la sonde 2 dans l'espace, notamment si celle-ci est positionnée à plat, en biais ou autre. De manière alternative ou additionnelle, cette caméra 31 peut être conçue pour détecter le flux optique et/ou pour collecter des images formées par un faisceau de lumière projeté à l'intérieur du conduit souterrain C, ceci par un moyen de projection que comporte la sonde 2.

De manière additionnelle, ces premiers moyens de détermination 3 peuvent, aussi, comporter au moins un magnétomètre 32 que comporte ladite sonde 2.

Une autre caractéristique consiste en ce que la sonde 2 peut, encore, comporter au moins un capteur de température (non représenté) et/ou au moins un capteur de pression (non représenté).

Encore une autre caractéristique consiste en ce que la sonde 2 peut comporter une mémoire 4 pour l'enregistrement des données fournies au moins par la centrale inertielle 30 (plus particulièrement par le ou les accéléromètres 300 et/ou par le ou les gyroscopes 301 que comporte cette centrale inertielle 30).

De manière alternative ou (et de préférence additionnelle) cette mémoire 4 peut être conçue pour l'enregistrement des données fournies au moins par les premiers moyens de détermination 3 (plus particulièrement par la centrale inertielle 30 - notamment par le ou les accéléromètres 300 et/ou par le ou les gyroscopes 301 - et/ou par la ou les caméras 31, voire encore par le ou les magnétomètres 32), voire encore par le ou les capteurs de température et/ou par le ou les capteurs de pression.

Selon une caractéristique additionnelle, le dispositif 1 comporte au moins un moyen de guidage 5 pour guider ladite sonde 2 à l'intérieur du conduit souterrain C.

En fait, un tel moyen de guidage 5 est constitué par au moins un organe flexible 50, équipant ladite sonde 2, et s'étendant à partir de cette sonde 2, selon le cas dans la direction de déplacement de cette sonde 2 à l'intérieur du conduit C ou dans une direction formant un angle non nul avec cette direction de déplacement de cette sonde 2 à l'intérieur du conduit C.

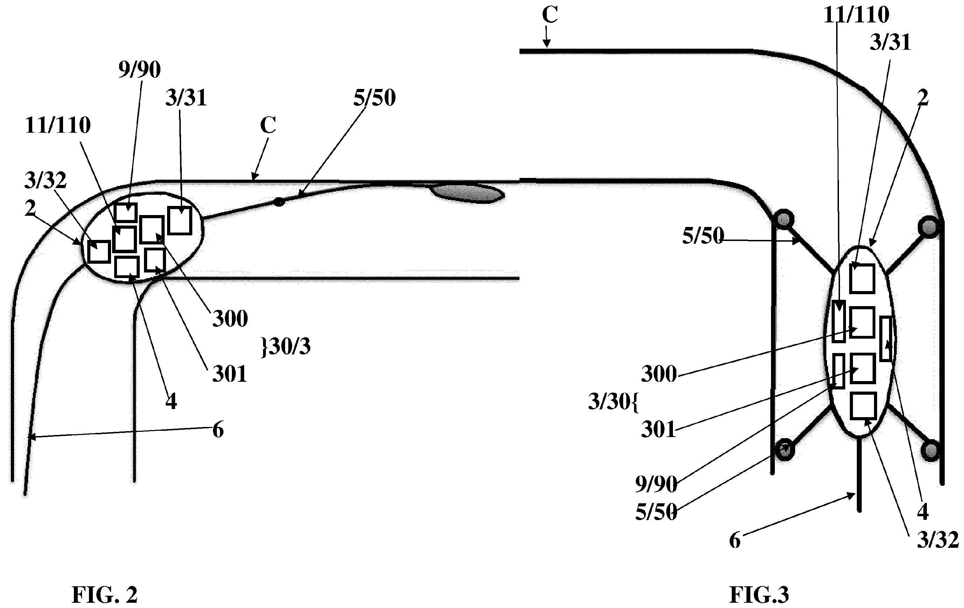

Tel que visible sur la figure 2 correspondant à un premier mode de réalisation de ce moyen de guidage 5, celui-ci 5 est constitué par un organe flexible 50, équipant ladite sonde 2, et s'étendant à partir de cette sonde 2 (plus particulièrement à l'avant de cette sonde 2) et dans la direction de déplacement de cette sonde 2 à l'intérieur du conduit C.

Ledit organe flexible 50 comporte un embout présentant une flexibilité supérieure à celle du ou des moyens de raccordement 6. Une telle flexibilité permet, avantageusement, d'assurer le passage dans les contours serrés du conduit souterrain C.

Selon un mode de réalisation particulier, cet organe flexible 50 comporte, d'une part, un tel embout et, d'autre part, une portion d'un tel moyen de raccordement 6 présentant une extrémité libre équipée avec ledit embout.

Dans un pareil cas, ledit moyen de raccordement 6 transporte ladite sonde 2, qui équipe un tel moyen de raccordement 6, et qui se situe en retrait par rapport à l'extrémité libre de ce moyen de raccordement 6.

En fait, cet organe flexible 50 peut être de type vibrant. Aussi, en cas d'obstacle à l'avant de la sonde 2 (ceci conformément à la direction de déplacement de cette sonde 2 à l'intérieur du conduit C), cet organe flexible vibrant 50 vibre et trouve son chemin. Un tel organe flexible vibrant 50 permet, alors, avantageusement, d'éviter les soubresauts de la sonde 2 et minimise les erreurs.

Un autre mode de réalisation, illustré figure 3, concerne un moyen de guidage 5 constitué par une pluralité d'organes flexibles 50, équipant ladite sonde 2, et s'étendant à partir de cette sonde 2, ceci dans une direction formant un angle non nul (notamment un angle compris entre 45° et 90°) avec la direction de déplacement de cette onde 2 à l'intérieur du conduit C.

Ces organes flexibles 50 peuvent adopter, chacun, la forme d'une patte ou analogue. Selon le mode de réalisation illustré figure 3, le moyen de guidage 5 comporte quatre organes flexibles 50 conférant à ladite sonde 2 la forme d'une araignée d'eau.

Un tel moyen de guidage 5 permet, avantageusement, de maintenir la sonde 2 au centre du conduit souterrain C.

Une autre caractéristique consiste en ce que le dispositif 1 comporte un moyen de raccordement 6 pour raccorder la sonde 2 à un point fixe situé à l'extérieur du conduit souterrain C.

Ce moyen de raccordement 6, d'une part, est de type semi-rigide et présente une rigidité permettant, en agissant sur ce moyen de raccordement 6 à l'extérieur du conduit souterrain C, de repousser la sonde 2 à l'intérieur de ce conduit souterrain C, ceci pour assurer le déplacement de cette sonde 2 à l'intérieur de ce conduit souterrain C. D'autre part, ce moyen de raccordement 6 s'étendant selon un axe et comportant des moyens pour accroître la rigidité de ce moyen de raccordement 6, ceci selon au moins une direction déterminée perpendiculaire à l'axe selon lequel s'étend ce moyen de raccordement 6 et par rapport à au moins une autre direction perpendiculaire à cet axe.

Cette caractéristique permet au moyen de raccordement 6 de présenter un tangage et un roulis limités (plus particulièrement entre deux points de déplacement proches) ainsi qu'un lacet pratiquement nul. Cette caractéristique permet, également, de rendre plus difficile la déformation du moyen de raccordement 6 dans une direction selon laquelle ces moyens pour accroître la rigidité produisent des effets et/ou au moyen de raccordement 6 de présenter une facilité à la déformation selon les directions autres que celles selon lesquelles les moyens pour accroître la rigidité produisent des effets. Il en découle que le moyen de raccordement 6 présente une facilité et/ou une résistance à la déformation différentes selon certaines directions de l'espace par rapport à d'autres. Ceci a pour effet de réduire les degrés de liberté de la sonde 2 et de limiter les possibilités de mouvement de cette sonde 2 dans certaines directions de l'espace. L'espace devient non homogène de sorte que les variables liées au déplacement de la sonde 2 (accélération, vitesse, déplacement) acquièrent un taux d'indépendance selon les directions de l'espace. Ceci permet, d'une part, de fabriquer une pluralité de variables indépendantes avec un même nombre de capteurs et, d'autre part, d'inférer avec une certaine probabilité le point d'arrivée de la sonde 2 ainsi que son orientation dans l'espace, ceci après un incrément de déroulement/enroulement du moyen de raccordement.

Ainsi, le moyen de raccordement 6 comporte des moyens pour accroître sa rigidité, ceci selon au moins une direction déterminée perpendiculaire à l'axe selon lequel s'étend ce moyen de raccordement 6.

A ce propos, on observera que ce moyen de raccordement 6 présente, perpendiculairement à l'axe selon lequel s'étend ce moyen de raccordement 6, une section non circulaire, de préférence parallélépipédique, qui, en fait, constitue lesdits moyens pour accroître la rigidité.

Une autre caractéristique consiste en ce que le moyen de raccordement 6 est constitué par un ruban présentant, perpendiculairement à l'axe selon lequel s'étend ce moyen de raccordement 6, une section non circulaire, de préférence rectangulaire, qui constitue les moyens pour accroître la rigidité.

Une caractéristique additionnelle consiste en ce que le dispositif 1 de cartographie comporte, alors, également, des deuxièmes moyens de détermination 7 pour déterminer la longueur et/ou la vitesse de déplacement et/ou l'accélération de ce moyen de raccordement 6.

A ce propos, on observera que ces deuxièmes moyens de détermination 7 peuvent, alors, comporter un moyen de détermination 70 de la longueur d'un tel moyen de raccordement 6, ce moyen de détermination 70 pouvant être constitué par un compteur métrique de la longueur de déroulement du ruban ou du câble constituant un tel moyen de raccordement 6. Ces deuxième moyens de détermination 7 peuvent, également, comporter un moyen de détermination 71 de la vitesse de déplacement d'un tel moyen de raccordement 6, ce moyen de détermination 71 pouvant être constitué par un moyen de mesure pour mesurer la vitesse de défilement du ruban ou du câble constituant un tel moyen de raccordement 6.

En fait, ces deuxièmes moyens de détermination 7 permettent, avantageusement, de déterminer la longueur (notamment de déroulement ou d'enroulement) et/ou la vitesse de déplacement (notamment de déroulement ou d'enroulement) et/ou l'accélération du moyen de raccordement 6, ceci avec une précision bien plus élevée que celles calculées sur la base des données fournies par les premiers moyens de détermination 3 et/ou par la centrale inertielle 30, plus particulièrement par le ou les accéléromètres 300.

Une autre caractéristique consiste en ce que le dispositif 1 comporte au moins un moyen de commande 8 pour commander le déplacement de la sonde 2 à l'intérieur du conduit C.

Selon un premier mode de réalisation non représenté, ce moyen de commande 8 est constitué par un moyen de propulsion (notamment motorisé) que comporte la sonde 2.

Cependant et selon un mode de réalisation préféré illustré sur les figures en annexe, le moyen de commande 8 comporte, d'une part, le moyen de raccordement 6 et, d'autre part, un dérouleur 80, notamment motorisé, de ce ou ces moyens de raccordement 6.

En ce qui concerne ledit dérouleur 80, celui-ci est conçu pour agir sur le moyen de raccordement 6, ceci pour repousser la sonde 2 à l'intérieur du conduit souterrain C mais également pour tracter ladite sonde 2 en vue de son retrait hors de ce conduit souterrain C.

A ce propos, on observera qu'un tel dérouleur motorisé 80 peut comporter un moyen de contrôle pour contrôler la longueur (notamment de déroulement ou d'enroulement) et/ou la vitesse de déplacement (notamment de déroulement ou d'enroulement) et/ou l'accélération du moyen de raccordement 6. Un tel moyen de contrôle peut, alors et avantageusement, constituer et/ou intégrer les deuxièmes moyens de détermination 7 de la longueur et/ou de la vitesse de déplacement et/ou de l'accélération de ce moyen de raccordement 6.

L'utilisation d'un tel dérouleur 80 permet, également, de prévoir et de contrôler des arrêts permettant des remises à zéro périodiques, ceci comme il sera explicité ultérieurement dans le cadre d'un procédé de cartographie mettant en oeuvre le dispositif 1.

Une autre caractéristique consiste en ce que le dispositif 1 peut comporter au moins un moyen de détection 9 pour détecter, en surface, la position de la sonde 2 à l'intérieur du conduit C.

En fait, ce ou ces moyens de détection 9 comportent, alors, d'une part, au moins un moyen d'émission 90 pour émettre un signal radio et que comporte la sonde 2 et, d'autre part, au moins un moyen de réception 91 pour recevoir le signal radio émis par le ou les moyens d'émission 90, un tel moyen de réception 91 étant destiné à être positionné en surface.

A ce propos, on observera que ce ou ces moyens de détection 9 comportent, de préférence, une pluralité de moyens de réception 91 chacun constitué par un capteur, ces moyens de réception étant, alors, agencés sous forme d'un réseau de capteurs conçu pour détecter la position de la sonde 2 par triangulation.

Une caractéristique additionnelle consiste en ce que le dispositif 1 comporte, d'une part, un moyen de traitement 10 pour le traitement des données fournies au moins par la centrale inertielle 30 (plus particulièrement par le ou les accéléromètres 300 et/ou par le ou les gyroscopes 301), voire par les premiers moyens de détermination 3 (centrale inertielle 30, caméra 31, magnétomètre 32), ainsi que par les deuxièmes moyens de détermination 7, voire encore par le ou les moyens de détection 9 et/ou par le ou les capteurs de température et/ou par le ou les capteurs de pression.

De manière additionnelle, ce dispositif 1 comporte, d'autre part, au moins un moyen de transmission 11 pour transmettre, audit moyen de traitement 10, au moins les données fournies par les deuxièmes moyens de détermination 7 ainsi que les données fournies par la centrale inertielle 30 (voire les données fournies par les premiers moyens de détermination 3), plus particulièrement, les données fournies par cette centrale inertielle 30 et enregistrées dans la mémoire 4 de la sonde 2.

Selon un premier mode de réalisation, un tel moyen de transmission 11 peut, au moins en partie, être constitué par le moyen de raccordement 6 mentionné ci-dessus.

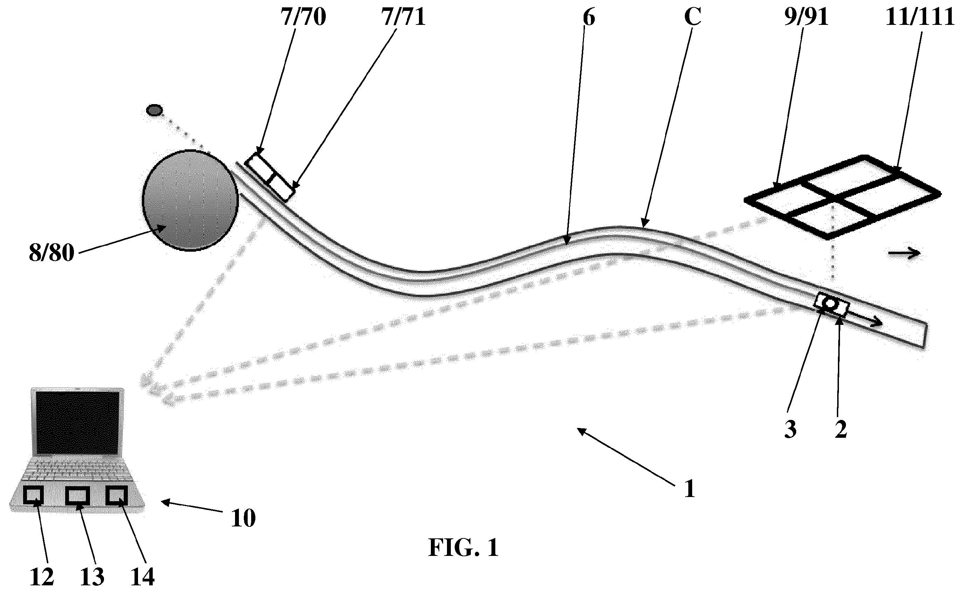

Selon un deuxième mode de réalisation illustré figure 1, le moyen de transmission 11 pour transmettre, audit moyen de traitement 10, au moins les données fournies par la centrale inertielle 30 (plus particulièrement les données fournies par la centrale inertielle 30 et enregistrées dans la mémoire 4 de la sonde 2), voire les données fournies par les premiers moyens de détermination 3 (voire encore par le ou les capteurs de température et/ou par le ou les capteurs de pression), comporte, d'une part, au moins un moyen d'émission 110, que comporte la sonde 2, et qui est conçu pour émettre un signal radio véhiculant les données fournies au moins par la centrale inertielle 30, et plus particulièrement enregistrées dans la mémoire 4 (voire fournies par les premiers moyens de détermination 3, centrale inertielle 30, caméra 31, magnétomètre 32, voire encore par le ou les capteurs de température et/ou par le ou les capteurs de pression).

D'autre part, un tel moyen de transmission 11 comporte au moins un moyen de réception 111, que comporte le dispositif 1, et qui est conçu pour recevoir, en surface, le signal émis pas le ou les moyens d'émission 110.

Selon un mode particulier de réalisation, le dispositif comporte une pluralité de moyens de réception 111 chacun constitué par un capteur, ces moyens de réception 111 étant agencés sous forme d'un réseau de capteurs.

Selon un mode de réalisation préféré de l'invention, le ou les moyens d'émission 110 du signal radio véhiculant les données fournies au moins par la centrale inertielle 30 (voire fournies par les premiers moyens de détermination 3, voire encore par le ou les capteurs de température et/ou par le ou les capteurs de pression), sont constitués par le ou les moyens d'émission 90 que comportent les moyens de détection 9 mentionnés ci-dessus.

De manière additionnelle, le ou les moyens de réception 111 du signal radio véhiculant les données fournies au moins par la centrale inertielle 30 (voire fournies par les premiers moyens de détermination 3, voire encore par le ou les capteurs de température et/ou par le ou les capteurs de pression), sont constitués par le ou les moyens de réception 91 que comportent les moyens de détection 9 mentionnés ci-dessus.

Une caractéristique additionnelle consiste en ce que le dispositif 1 comporte un moyen de calcul 12 pour calculer, dans un référentiel en trois dimensions, les coordonnées de la sonde 2, ceci au moins à partir des données fournies au moins par la centrale inertielle 30 (plus particulièrement par le ou les accéléromètres 300 et/ou par le ou les gyroscopes 301), voire par les premiers moyens de détermination 3 (notamment par la centrale inertielle 30 et/ou par la ou les caméras 31 et/ou par le ou les magnétomètres 32) ainsi que par les deuxièmes moyens de détermination 7 (de la longueur et/ou de la vitesse de déplacement et/ou de l'accélération du moyen de raccordement 6).

De manière additionnelle, un tel moyen de calcul 12 peut encore être conçu pour calculer de telles coordonnées à partir des données fournies par le ou les moyens de détection 9 et/ou par le ou les capteurs de température et/ou par le ou les capteurs de pression, ceci en plus des données fournies par la centrale inertielle 30 (voire par les premiers moyens de détermination 3) ainsi que par les deuxièmes moyens de détermination 7.

A ce propos, on observera que la centrale inertielle 30, les premiers moyens de détermination 3 ainsi que les deuxièmes moyens de détermination 7, voire encore le ou les moyens de détection 9, le ou les capteurs de température et/ou le ou les capteurs de pression sont susceptibles de fournir des données redondantes.

Selon une autre caractéristique, ledit moyen de calcul 12 comporte un algorithme de fusion des données (plus particulièrement un algorithme de fusion des données redondantes) fournies au moins par la centrale inertielle 30 (voire par les premiers moyens de détermination 3) ainsi que par les deuxièmes moyens de détermination 7, voire encore par le ou les moyens de détection 9.

Selon un mode préféré de réalisation, cet algorithme de fusion de données est basé sur un filtre de Kalmann et/ou est un algorithme d'optimisation non linéaire.

De manière additionnelle, un tel algorithme est utilisé en combinaison avec des techniques connues sous la dénomination « zéro velocity updates » ZUPT, plus particulièrement sous la dénomination « periodic zéro velocity updates ».

Ceci permet, avantageusement, d'accroître de manière significative la précision des coordonnées calculées.

Le dispositif 1 comporte, encore, un moyen de cartographie 13 pour cartographier en trois dimensions le conduit souterrain C, ceci à partir des coordonnées calculées par le moyen de calcul 12.

Ce dispositif 1 comporte, également, au moins une mémoire 14 pour enregistrer les données fournies au moins par la centrale inertielle 30 (voire fournies par les premiers moyens de détermination 3, notamment par la centrale inertielle 30 et/ou par la ou les caméras 31 et/ou par le ou les magnétomètres 32) ainsi que par les deuxièmes moyens de détermination 7 (de la longueur et/ou de la vitesse de déplacement et/ou de l'accélération du moyen de raccordement 6), voire encore par le ou les moyens de détection 9 et/ou par le ou les capteurs de température et/ou par le ou les capteurs de pression.

A ce propos, on observera que le moyen de calcul 12 mentionné ci-dessus peut, alors, être conçu pour calculer les coordonnées de la sonde 2, ceci à partir de ces données enregistrées (dans ladite mémoire 14) et de manière différée dans le temps.

De manière additionnelle, ce moyen de calcul 12 peut, encore, être conçu pour calculer ces coordonnées après synchronisation dans le temps de ces données enregistrées.

Aussi et selon un mode de réalisation préféré, c'est, plus particulièrement, ledit moyen de traitement 10 susmentionné qui comporte ledit moyen de calcul 12, ledit moyen de cartographie 13 ainsi que ladite mémoire 14. Un tel moyen de traitement 10 est constitué par un ordinateur tandis que le moyen de calcul 12 et/ou le moyen de cartographie 13 sont constitués par un logiciel implémenté sur cet ordinateur.

On observera que le moyen de calcul 12 mentionné ci-dessus permet, alors, de calculer lesdites coordonnées de la sonde 2, ceci de manière absolue.

Le dispositif 1 de cartographie peut, également, comporter des moyens de calage (non représentés) pour caler la sonde 2 dans une position initiale, ceci préalablement à l'introduction de cette sonde 2 dans le conduit souterrain C.

De tels moyens de calage sont conçus pour positionner cette sonde 2 dans un repère (notamment orthonormé) caractérisé par son centre (correspondant, plus particulièrement, à la position initiale de la sonde 2) et par son orientation. C'est, plus particulièrement, dans ce repère que va évoluer ladite sonde 2, notamment lors de son déplacement dans le conduit souterrain C.

C'est, également, dans ce repère que peuvent, alors, être calculées (de manière relative par rapport à ce repère) les coordonnées de la sonde 2, ceci par le moyen de calcul 12 mentionné ci-dessus et au moins lors de son déplacement dans le conduit souterrain C.

Une caractéristique additionnelle consiste en ce que le dispositif de cartographie 1 comporte, encore, un système de positionnement par satellite. Ce système de positionnement comporte, d'une part, au moins un laser (notamment un laser de chantier et/ou de précision) conçu pour donner une orientation relative de la sonde 2 et, d'autre part, un moyen de positionnement par satellite (notamment du type GPS) permettant de déterminer la position absolue de la sonde 2 et/ou du au moins un laser dans une projection imposée par le client.

Ce sont, plus particulièrement, les moyens de calage mentionnés ci-dessus, qui comportent alors au moins une partie de ce système de positionnement, ou auxquels est associé au moins une partie de ce système de positionnement.

La présence d'un tel système de positionnement permet, alors avantageusement, d'assurer un géoréférencement du centre du repère et, par conséquent également, un géoréférencement de la sonde 2 elle-même, ceci par calcul (effectué par l'intermédiaire du moyen de calcul 12 susmentionné) à partir, d'une part, des coordonnées (satellite) du centre du repère fournies par ce système de positionnement et, d'autre part, des coordonnées de la sonde 2 calculées par le moyen de calcul 12 mentionné ci-dessus.

L'invention concerne, également, un procédé de cartographie en trois dimensions d'un conduit souterrain C en tranchée fermée.

Ce procédé consiste en ce que :
- on positionne, dans une position initiale et en dehors du conduit C, une sonde 2 (présentant les caractéristiques décrites ci-dessus) raccordée à un point fixe situé à l'extérieur du conduit C, ceci par l'intermédiaire d'un moyen de raccordement 6 (présentant les caractéristiques décrites ci-dessus, à savoir, étant de type semi-rigide, présentant une rigidité permettant, en agissant sur ce moyen de raccordement 6 à l'extérieur du conduit souterrain C, de repousser la sonde 2 à l'intérieur de ce conduit souterrain C, s'étendant selon un axe, et comportant des moyens pour accroître la rigidité de ce moyen de raccordement 6, ceci selon au moins une direction déterminée perpendiculaire à l'axe selon lequel s'étend ce moyen de raccordement 6);
- on introduit la sonde 2 à l'intérieur du conduit C et on assure le déplacement de cette sonde 2 à l'intérieur de ce conduit C), ceci en repoussant cette sonde 2 à l'intérieur de ce conduit souterrain C en agissant sur le moyen de raccordement 6 à l'extérieur du conduit souterrain C;

- au cours du déplacement de la sonde 2 à l'intérieur du conduit C, on collecte des données fournies au moins, d'une part, par la centrale inertielle 30 (voire par les premiers moyens de détermination 3 pour déterminer la position et/ou l'orientation de la sonde 2), et, d'autre part, par les deuxièmes moyens de détermination 7 pour déterminer la longueur et/ou la vitesse de déplacement et/ou l'accélération du moyen de raccordement 6;
- par rapport à la position initiale et à partir des données collectées, on calcule (plus particulièrement par le biais du moyen de calcul 12 susmentionné) les coordonnées des positions adoptées par la sonde 2, ceci dans un référentiel à trois dimensions ;
- à partir des coordonnées calculées, on cartographie en trois dimensions le conduit souterrain C.

Ce procédé consiste en ce qu'on assure le déplacement de la sonde 2 à l'intérieur du conduit souterrain C.

A ce propos, on observera qu'un tel déplacement est commandé par l'intermédiaire du moyen de commande 8 susmentionné.

Tel que susmentionné, on assure le déplacement de la sonde 2 à l'intérieur du conduit souterrain C en repoussant cette sonde 2 à l'intérieur de ce conduit souterrain C, ceci en agissant sur le moyen de raccordement 6 à l'extérieur du conduit souterrain C, plus particulièrement par l'intermédiaire du dérouleur 80 mentionné ci-dessus.

En ce qui concerne les données fournies par la centrale inertielle 30, celles-ci correspondent à des données fournies par le ou les accéléromètres 300 et/ou par le ou les gyroscopes 301, tandis que les données fournies par les premiers moyens de détermination 3, celles-ci correspondant à des données fournies par la centrale inertielle 30 et/ou par la ou les caméras 31 et/ou par le ou les magnétomètres 32.

Ainsi, en particulier, les données fournies par les premiers moyens de détermination 3 correspondant à des données fournies au moins par la centrale inertielle 30, plus particulièrement fournies par le ou les accéléromètres 300 et/ou par le ou les gyroscopes 301.

Une autre caractéristique du procédé consiste en ce qu'au cours du déplacement de la sonde 2 à l'intérieur du conduit C, on peut encore collecter (en plus des données collectées par les deuxièmes moyens de détermination 7 et par la centrale inertielle 30, voire par les premiers moyens de détermination 3) des données fournies par au moins un moyen de détection 9 (présentant les caractéristiques décrites ci-dessus) pour détecter, en surface, la position de la sonde 2 à l'intérieur du conduit C. Ce procédé consiste, alors, également, en ce qu'on calcule (plus particulièrement par le biais du moyen de calcul 12 susmentionné) les coordonnées des positions de la sonde 2 également à partir de ces données collectées.

Une caractéristique additionnelle du procédé consiste en ce qu'au cours du déplacement de la sonde 2, on collecte aussi (et en plus des données collectées par les deuxièmes moyens de détermination 7 et par la centrale inertielle 30, voire par les premiers moyens de détermination 3) des données fournies par au moins un capteur de température et/ou par au moins un capteur de pression que comporte ladite sonde 2. Ce ou ces capteurs présentent les caractéristiques décrites ci-dessus.

Le procédé consiste, alors, en ce qu'on calcule les coordonnées des positions adoptées par la sonde 2, non seulement à partir des données collectées et fournies par la centrale inertielle 30 (voire par les premiers moyens de détermination 3, centrale inertielle 30, plus particulièrement accéléromètre 300 et/ou gyroscope 301, caméra 31, magnétomètre 32) ainsi que par les deuxièmes moyens de détermination 7 (de la longueur et/ou de la vitesse du déplacement et/ou de l'accélération du moyen de raccordement 6), mais également à partir des données collectées et fournies par le ou les moyens de détection 9, voire encore par le ou les capteurs de température et/ou par le ou les capteurs de pression.

Une autre caractéristique du procédé consiste en ce que, avant de calculer les coordonnées de la sonde 2, on transmet les données collectées à un moyen de traitement 10 (présentant les caractéristiques mentionnées ci-dessus).

En fait, on transmet, à ce moyen de traitement 10, les données collectées et fournies au moins par la centrale inertielle 30 (voire par les premiers moyens de détermination 3) et par les deuxièmes moyens de détermination 7, voire encore par le ou les moyens de détection 9 et/ou par le ou les capteurs de température et/ou par le ou les capteurs de pression.

A ce propos, on observera qu'une première solution consiste à transmettre de telles données (plus particulièrement les données fournies par la centrale inertielle 30, voire par les premiers moyens de détermination 3, voire encore par les capteurs de température et/ou de pression) au moins en partie par l'intermédiaire du moyen de raccordement 6 mentionné ci-dessus. Ce moyen de raccordement 6 ainsi que les deuxièmes moyens de détermination 7 (voire encore le ou les moyens de détection 9) sont, alors, raccordés (par une liaison filaire ou non) au moyen de traitement 10 pour la transmission, à ce moyen de traitement 10, des données collectées et fournies par la centrale inertielle 30 (voire par les premiers moyens de détermination 3) et par les deuxièmes moyens de détermination 7, voire encore par les capteurs de température et/ou de pression et/ou par le ou les moyens de détection 9.

Cependant et selon un autre mode de réalisation, lorsqu'on transmet les données collectées (plus particulièrement les données fournies au moins par la centrale inertielle 30, voire par les premiers moyens de détermination 3, voire encore par le ou les capteurs de température et/ou par le ou les capteurs de pression), d'une part, on émet, par au moins un moyen d'émission 110 que comporte la sonde 2 et que comporte un moyen de transmission 11 (présentant les caractéristiques mentionnées ci-dessus), un signal radio véhiculant les données fournies au moins par la centrale inertielle 30 (voire par les premiers moyens de détermination 3, voire encore par le ou les capteurs de température et/ou par le ou les capteurs de pression).

D'autre part et lorsqu'on transmet les données collectées, on reçoit, en surface, ce signal émis, ceci par l'intermédiaire d'au moins un moyen de réception 111 que comporte ce moyen de transmission 11.

Ce moyen de transmission 11 (plus particulièrement le ou les moyens de réception 111) ainsi que les deuxièmes moyens de détermination 7 (voire encore le ou les moyens de détection 9) sont, alors, raccordés (par une liaison filaire ou non) au moyen de traitement 10 pour la transmission, à ce moyen de traitement 10, des données collectées et fournies au moins par la centrale inertielle 30 (voire par les premiers moyens de détermination 3) ainsi que par les deuxièmes moyens de détermination 7, voire encore par les capteurs de température et/ou de pression et/ou par le ou les moyens de détection 9.

Encore une autre caractéristique du procédé consiste en ce que les données collectées sont transmises en temps réel et immédiatement après avoir été fournies par la centrale inertielle 30 (voire par les premiers moyens de détermination 3) et par les deuxièmes moyens de détermination 7, voire encore par le ou les capteurs de température et/ou par le ou les capteurs de pression et/ou par le ou les moyens de détection 9.

Cependant et selon une caractéristique préférée de ce procédé, avant de transmettre de telles données (collectées et fournies au moins par la centrale inertielle 30, voire par les premiers moyens de détermination 3, voire encore par le ou les capteurs de température et/ou par le ou les capteurs de pression), on enregistre ces données dans une mémoire 4 que comporte la sonde 2.

Ainsi, avant de calculer les coordonnées des positions adoptées par la sonde 2, on enregistre les données collectées et fournies au moins par la centrale inertielle 30 dans la mémoire 4 de la sonde 2 et on transmet ces données enregistrées au moyen de traitement 10 comportant le moyen de calcul 12 pour calculer ces coordonnées.

De manière additionnelle avant de transmettre les données collectées (fournies par les deuxièmes moyens de détermination 7, respectivement par le ou les moyens de détection 9), on enregistre ces données dans une mémoire que comportent ces deuxièmes moyens de détermination 7, respectivement ce ou ces moyens de détection 9.

Ces données peuvent, alors, être transmises, soit après un aller ou après un aller-retour de la sonde 2 dans le conduit C (plus particulièrement après la sortie de la sonde 2 hors du conduit C), soit (et de préférence) de manière périodique.

Tel que mentionné ci-dessus, on assure le déplacement de cette sonde 2 à l'intérieur de ce conduit C.

En fait, un tel déplacement peut être assuré en continu. Dans un pareil cas, les données collectées peuvent être transmises tel que mentionné ci-dessus.

Selon un autre mode de réalisation, le déplacement est assuré de manière discontinue, ceci en sorte que la sonde 2, d'une part, se déplace pendant une pluralité de périodes et, d'autre part, est à l'arrêt pendant au moins une autre période (voire et de préférence pendant une autre pluralité de périodes), une telle période d'arrêt entrecoupant deux périodes de déplacement de la sonde 2.

Ainsi et selon une autre caractéristique de l'invention, au cours du déplacement de la sonde 2 à l'intérieur du conduit souterrain C, d'une part, on collecte des données brutes fournies au moins par le ou les accéléromètres 300 et/ou par le ou les gyroscopes 301 que comporte la centrale inertielle 30 et, d'autre part, on assure au moins un arrêt de la sonde 2 au cours duquel ou desquels on procède à un calibrage de cette sonde 2.

En arrêtant périodiquement la sonde 2, il est possible, pendant une telle période d'arrêt, de stabiliser (voire d'immobiliser) cette sonde 2 et, ainsi et avantageusement, d'acquérir des données alors que cette sonde est stable (voire immobile). En fait, lorsque la sonde 2 est à l'arrêt, celle-ci est uniquement soumise à la gravité, c'est-à-dire à l'accélération de la pesanteur. Aussi lorsqu'on calibre la sonde 2, on calibre au moins le ou les accéléromètres 300 de cette sonde 2, ceci par rapport à l'accélération de la pesanteur.

Ainsi, lorsqu'on procède à un calibrage de la sonde 2, on collecte et on enregistre des données brutes, fournies au moins par le ou les accéléromètres (300) et/ou par le ou les gyroscopes (301), et correspondant à une position dans laquelle la sonde (2) est à l'arrêt et uniquement soumise à la gravité, c'est-à-dire à l'accélération de la pesanteur.

Le procédé consiste, alors et au moins en fonction des données brutes fournies au moins par le ou les accéléromètres 300 et/ou par le ou les gyroscopes 301 ainsi qu'à partir des résultats du calibrage, en ce qu'on calcule les coordonnées des positions adoptées par la sonde 2, ceci dans un référentiel à trois dimensions et plus particulièrement par l'intermédiaire du moyen de calcul 12 susmentionné). Finalement, à partir des coordonnées calculées, on cartographie en trois dimensions le conduit souterrain C.

A ce propos, on observera que, avant de calculer les coordonnées des positions adoptées par la sonde 2, on transmet les données brutes collectées au moyen de traitement 10. Ces données peuvent être transmises en temps réel. Cependant et selon un mode de réalisation préféré, ces données brutes sont enregistrées dans la mémoire 4 de la sonde 2, ceci avant d'être transmises au moyen de traitement 10, plus particulièrement de la manière décrite ci-dessus et/ou par l'intermédiaire des moyens de transmission 11 mentionnés ci-dessus.

Une caractéristique additionnelle consiste en ce que, après avoir transmis les données collectées au moyen de traitement 10 et avant de calculer les coordonnées des positions de la sonde 2, on enregistre ces données collectées dans une mémoire 14 que comporte un tel moyen de traitement 10, ceci avant de calculer (par l'intermédiaire du moyen de calcul 12) de manière différée dans le temps les coordonnées des positions de la sonde 2 à partir de ces données collectées et enregistrées.

Encore une autre caractéristique consiste en ce que, avant de calculer les positions de la sonde 2, on synchronise dans le temps les données collectées et enregistrées dans la mémoire 14 du moyen de traitement 10.

Tel que mentionné ci-dessus, on calcule les coordonnées des positions adoptées par la sonde 2, ceci à partir des données collectées et fournies au moins par les deuxièmes moyens de détermination 7 ainsi que par la centrale inertielle 30 (voire par les premiers moyens de détermination 3), plus particulièrement par les ou les accéléromètres 300 et/ou par le ou les gyroscopes 301.

A ce propos, on observera que les données fournies par le ou les accéléromètres 300 permettent de déterminer la position et/ou le déplacement de la sonde 2. En fait, on détermine la position et/ou le déplacement de la sonde 2 par calcul (plus particulièrement par le biais du moyen de calcul 12 susmentionné), ceci en intégrant selon le temps et par deux fois les mesures effectuées par ce ou ces accéléromètres 300, notamment après avoir préalablement enlevé l'effet de la gravitation sur ces mesures, voire le bruit et/ou les offsets des capteurs.

De plus, les données fournies par le ou les gyroscopes 301 permettent de déterminer l'orientation et/ou l'attitude de la sonde 2. En fait, on détermine l'orientation et/ou l'attitude de la sonde 2 par calcul (plus particulièrement par le biais du moyen de calcul 12 susmentionné), ceci en intégrant selon le temps les mesures effectuées par ce ou ces gyroscopes 31.

Tel que mentionné ci-dessus, on calcule les coordonnées des positions adoptées par la sonde 2, ceci à partir des données collectées et fournies au moins par la centrale inertielle 30 ainsi que par les deuxièmes moyens de détermination 7.

A ce propos, on observera que, selon l'invention, ces données collectées et fournies permettent de déterminer l'attitude de la sonde 2, plus particulièrement à partir des données fournies par le ou les gyroscopes 301 (notamment par intégration des données fournies par ce ou ces gyroscopes 301 à tout instant) ainsi que par le ou les accéléromètres 300 (plus particulièrement lorsque ce ou ces accéléromètres 300 sont à l'arrêt).

Ces données collectées et fournies permettent, également, de déterminer la norme du déplacement de la sonde 2, plus particulièrement à partir des données fournies par le ou les accéléromètres 300 (notamment par une double intégration des données fournies par ce ou ces accéléromètres 300) ainsi qu'à partir des données fournies par les deuxièmes moyens de détermination 7 (plus particulièrement par le dérouleur 80).

Finalement, ces données collectées et fournies permettent de déterminer la vitesse de déroulement du moyen de raccordement 6, plus particulièrement à partir des données fournies par le dérouleur 80 (notamment par une dérivée temporelle de l'information fournie par ce dérouleur 80), ainsi que par le ou les accéléromètres 300 (notamment par intégration des données fournies par ce ou ces accéléromètres 300).

Aussi et selon l'invention, c'est, plus particulièrement, à partir de l'attitude de la sonde 2, de la norme du déplacement de la sonde 2, et de la vitesse du déroulement du moyen de raccordement 6 que les coordonnées des positions de la sonde 2 sont calculées, notamment par fusion de ces données.

A ce propos, on observera que, lorsqu'on calcule les coordonnées des positions de la sonde 2, on met en oeuvre un algorithme de fusion des données collectées, notamment un algorithme basé sur un filtre de Kalman et/ou un algorithme d'optimisation non linéaire, et/ou une technique connue sous la dénomination « zéro velocity updates » ZUPT, plus particulièrement sous la dénomination « periodic zéro velocity updates »

On observera que l'utilisation du moyen de raccordement 6 présentant les caractéristiques mentionnées ci-dessus et l'arrêt de la sonde 2 au cours du déplacement de celle-ci 2 dans le conduit C (avec le calibrage qui en résulte) permettent, avantageusement, d'inférer des hypothèses rendant la fusion de données plus efficace.

L'utilisation d'un tel algorithme de fusion de données, l'utilisation du moyen de raccordement 6 présentant les caractéristiques mentionnées ci-dessus, l'utilisation de données redondantes, la synchronisation dans le temps des données collectées, le calibrage, et le calcul différé dans le temps permettent, avantageusement, de corriger la plupart des erreurs (notamment dues à une sonde 2 qui n'est pas positionnée au centre du conduit C) et de fournir des coordonnées de sonde 2 particulièrement précises.

Etant donné que la sonde 2 est sensiblement positionnée au centre du conduit C à cartographier, le calcul des cordonnées de la sonde 2 permet d'obtenir les coordonnées du centre du conduit C.

Le procédé selon l'invention consiste, aussi, en ce qu'on assure le calage de la sonde 2 dans une position initiale, ceci préalablement à l'introduction de cette sonde 2 dans le conduit souterrain C.

En fait, un tel calage consiste à positionner cette sonde 2 dans un repère (notamment orthonormé) caractérisé par son centre (correspondant, plus particulièrement, à la position initiale de la sonde 2) et par son orientation.

Le procédé consiste, alors, en ce qu'on calcule (par l'intermédiaire du moyen de calcul 12) les coordonnées de la sonde 2, ceci au moins lors de son déplacement dans le conduit souterrain C et de manière relative par rapport à ce repère.

Le procédé peut, encore, consister à assurer un géoréférencement du centre du repère (donc de la position initiale de la sonde 2), plus particulièrement à partir des coordonnées (satellite) de ce centre du repère fournies par un système de positionnement satellite mentionné ci-dessus.

Ce procédé consiste, alors, également, à assurer un géoréférencement de la sonde 2 elle-même, ceci par calcul (effectué par l'intermédiaire du moyen de calcul 12 susmentionné) à partir, d'une part, des coordonnées (satellite) du centre du repère (et, donc, plus particulièrement de la position initiale de la sonde 2) fournies par le système de positionnement satellite mentionné ci-dessus et, d'autre part, des coordonnées de la sonde 2 calculées par le moyen de calcul 12 mentionné ci-dessus.

## Revendications

1. Dispositif de cartographie (1) en trois dimensions d'un conduit souterrain (C) en tranchée fermée, ce dispositif (1) comportant :
- une sonde (2), destinée à être introduite à l'intérieur du conduit souterrain (C), et comportant une centrale inertielle (30) comportant au moins un accéléromètre (300) et/ou au moins un gyroscope (301) ;
- un moyen de raccordement (6) pour raccorder la sonde (2) à un point fixe situé à l'extérieur du conduit (C), ce moyen de raccordement (6), d'une part, étant de type semi-rigide et présentant une rigidité permettant, en agissant sur ce moyen de raccordement (6) à l'extérieur du conduit souterrain (C), de repousser la sonde (2) à l'intérieur de ce conduit souterrain (C), ceci pour assurer le déplacement de cette sonde (2) à l'intérieur de ce conduit souterrain (C), d'autre part, s'étendant selon un axe et comportant des moyens pour accroître la rigidité de ce moyen de raccordement (6), ceci selon au moins une direction déterminée perpendiculaire à l'axe selon lequel s'étend ce moyen de raccordement (6) et par rapport à au moins une autre direction perpendiculaire à cet axe ;
- des deuxièmes moyens de détermination (7) pour déterminer la longueur et/ou la vitesse de déplacement et/ou l'accélération du moyen de raccordement (6);
- un moyen de calcul (12) pour calculer, dans un référentiel en trois dimensions, les coordonnées de la sonde (2), ceci au moins à partir des données fournies au moins par la centrale inertielle (30) et par les deuxièmes moyens de détermination (7);
- un moyen de cartographie (13) pour cartographier en trois dimensions le conduit souterrain (C), ceci à partir des coordonnées de la sonde (2) calculées par le moyen de calcul (12).

2. Dispositif de cartographie (1) selon la revendication 1, **caractérisé par le fait que** le moyen de raccordement (6) présente, perpendiculairement à l'axe selon lequel s'étend ce moyen de raccordement (6), une section non circulaire, de préférence parallélépipédique, qui constitue les moyens pour accroître la rigidité.

3. Dispositif de cartographie (1) selon l'une quelconque des revendications précédentes, **caractérisé par le fait que** le moyen de raccordement (6) est constitué par un ruban présentant, perpendiculairement à l'axe selon lequel s'étend ce moyen de raccordement (6), une section non circulaire, de préférence rectangulaire, qui constitue les moyens pour accroître la rigidité.

4. Dispositif de cartographie (1) selon l'une quelconque des revendications précédentes, **caractérisé par le fait que** la sonde (2) comporte une mémoire (4) pour enregistrer les données fournies au moins par la centrale inertielle (30) tandis que le dispositif (1) comporte, d'une part, un moyen de traitement (10) pour le traitement des données fournies au moins par la centrale inertielle (30) et par les deuxièmes moyens de détermination (7) et, d'autre part, au moins un moyen de transmission (11) pour transmettre, audit moyen de traitement (10), au moins les données fournies par les deuxièmes moyens de détermination (7) ainsi que les données fournies par la centrale inertielle (30) et enregistrées dans la mémoire (4) de la sonde (2).

5. Dispositif de cartographie (1) selon la revendication 4, **caractérisé par le fait que** le moyen de transmission (11) pour transmettre, audit moyen de traitement (10), les données fournies au moins par la centrale inertielle (30) et enregistrées dans la mémoire (4) de la sonde (2) comporte, d'une part, au moins un moyen d'émission (110), que comporte la sonde (2), et qui est conçu pour émettre un signal radio véhiculant les données fournies au moins par la centrale inertielle (30) que comporte la sonde (2) et, d'autre part, au moins un moyen de réception (111), que comporte le dispositif (1), et qui est conçu pour recevoir, en surface, le signal émis pas le ou les moyens d'émission (110).

6. Dispositif de cartographie (1) selon l'une quelconque des revendications précédentes, **caractérisé par le fait que** le moyen de calcul (12) comporte un algorithme de fusion des données fournies au moins par la centrale inertielle (30) et par les deuxièmes moyens de détermination (7).

7. Dispositif de cartographie (1) selon l'une quelconque des revendications précédentes, **caractérisé par le fait qu'**il comporte une mémoire (14) pour enregistrer les données fournies au moins par la centrale inertielle (30) et par les deuxièmes moyens de détermination (7), et que le moyen de calcul (12) est conçu pour calculer les coordonnées de la sonde (2), ceci à partir de ces données enregistrées dans la mémoire (14) et de manière différée dans le temps.

8. Dispositif de cartographie (1) selon l'une quelconque des revendications précédentes, **caractérisé par le fait que** le dispositif (1) comporte au moins un moyen de guidage (5) pour guider cette sonde (5) à l'intérieur du conduit souterrain (C), un tel moyen de guidage (5) étant constitué par au moins un organe flexible (50), équipant ladite sonde (2), et s'étendant à partir de cette sonde (2), selon le cas dans la direction de déplacement de cette sonde (2) à l'intérieur du conduit (C) ou dans une direction formant un angle non nul avec cette direction de déplacement de cette sonde (2) à l'intérieur du conduit (C).

9. Procédé de cartographie en trois dimensions d'un conduit souterrain (C) en tranchée fermée, ce procédé consiste en ce que :
- on positionne, dans une position initiale et en dehors du conduit (C), une sonde (2) raccordée à un point fixe situé à l'extérieur du conduit (C), ceci par l'intermédiaire d'un moyen de raccordement (6), d'une part, de type semi-rigide et présentant une rigidité permettant, en agissant sur ce moyen de raccordement (6) à l'extérieur du conduit souterrain (C), de repousser la sonde (2) à l'intérieur de ce conduit souterrain (C), d'autre part, s'étendant selon un axe et comportant des moyens pour accroître la rigidité de ce moyen de raccordement (6), ceci selon au moins une direction déterminée perpendiculaire à l'axe selon lequel s'étend ce moyen de raccordement (6) et par rapport à au moins une autre direction perpendiculaire à cet axe ;
- on introduit la sonde (2) à l'intérieur du conduit (C) et on assure le déplacement de cette sonde (2) à l'intérieur de ce conduit (C), ceci en repoussant cette sonde (2) à l'intérieur de ce conduit souterrain (C) en agissant sur le moyen de raccordement (6) à l'extérieur du conduit souterrain (C);
- au cours du déplacement de la sonde (2) à l'intérieur du conduit (C), on collecte des données fournies au moins, d'une part, par une centrale inertielle (30) que comporte la sonde (2) et qui comporte au moins un accéléromètre (300) et/ou au moins un gyroscope (301), et, d'autre part, par des deuxièmes moyens de détermination (7) pour déterminer la longueur et/ou la vitesse de déplacement et/ou l'accélération du moyen de raccordement (6) ;
- par rapport à la position initiale et à partir des données collectées, on calcule les coordonnées des positions adoptées par la sonde (2), ceci dans un référentiel à trois dimensions ;
- à partir des coordonnées calculées, on cartographie en trois dimensions le conduit souterrain (C).

10. Procédé de cartographie selon la revendication 9, **caractérisé par le fait que** :
- au cours du déplacement de la sonde (2) à l'intérieur du conduit souterrain (C), d'une part, on collecte des données brutes fournies au moins par le ou les accéléromètres (300) et/ou par le ou les gyroscopes (301) que comporte la centrale inertielle (30) et, d'autre part, on assure au moins un arrêt de la sonde (2) au cours duquel ou desquels on procède à un calibrage de cette sonde (2);
- au moins en fonction des données brutes fournies au moins par le ou les accéléromètres (300) et/ou par le ou les gyroscopes (301) ainsi qu'à partir des résultats du calibrage, on calcule les coordonnées des positions adoptées par la sonde (2), ceci dans un référentiel à trois dimensions ;
- à partir des coordonnées calculées, on cartographie en trois dimensions le conduit souterrain (C).

11. Procédé de cartographie selon la revendication 10, **caractérisé par le fait que** lorsqu'on procède à un calibrage de la sonde (2), on collecte des données brutes, fournies au moins par le ou les accéléromètres (300) et/ou par le ou les gyroscopes (301), et correspondant à une position dans laquelle la sonde (2) est à l'arrêt.

12. Procédé de cartographie selon l'une quelconque des revendications 9 à 11, **caractérisé par le fait que**, avant de calculer les coordonnées des positions adoptées par la sonde (2), on enregistre les données collectées et fournies au moins par la centrale inertielle (30) dans une mémoire (4) que comporte la sonde (2) et on transmet ces données enregistrées à un moyen de traitement (10) comportant un moyen de calcul (12) pour calculer ces coordonnées.

13. Procédé de cartographie selon l'une quelconque des revendications 9 à 12, **caractérisé par le fait qu'**on transmet les données collectées à un moyen de traitement (10) et on enregistre ces données collectées dans une mémoire (14) que comporte un tel moyen de traitement (10), ceci avant de calculer de manière différée dans le temps les coordonnées des positions de la sonde (2) à partir de ces données collectées et enregistrées dans la mémoire (14).

14. Procédé de cartographie selon la revendication 13, **caractérisé par le fait que**, lorsqu'on transmet les données collectées, d'une part, on émet, par au moins un moyen d'émission (110) que comporte la sonde (2) et que comporte un moyen de transmission (11), un signal radio véhiculant les données fournies au moins par la centrale inertielle (30) et, d'autre part, on reçoit, en surface, ce signal émis, ceci par l'intermédiaire d'au moins un moyen de réception (111) que comporte ce moyen de transmission (11).

15. Procédé de cartographie selon l'une quelconque des revendications 9 à 14, **caractérisé par le fait que** lorsqu'on calcule les coordonnées des postions de la sonde (2), on met en oeuvre un algorithme de fusion des données collectées, notamment un algorithme basé sur un filtre de Kalman et/ou un algorithme d'optimisation non linéaire, et/ou une technique connue sous la dénomination « zéro velocity updates » ZUPT.
